# EUROPEAN PATENT APPLICATION

(11) **EP 4 800 882 A1**
(43) Date of publication of application: **02.09.2026**
(21) Application number: 26161102.4
(22) Date of filing: 26.02.2026
(51) Int. Cl.: H02J 9/06, H02J 3/007

(54) **TRANSFER SWITCH WITH DELAYED OPTIMAL POWER TRANSFER**

(30) Priority: 26.02.2025 US 202563763475 P; 18.02.2026 US 202619543267
(71) Applicant: Vertiv Corporation, Westerville, OH 43082 (US)
(72) Inventor: PELTIER, Jason D., Westerville, 43082 (US); CARNEY, Kevin, Westerville, 43082 (US)
(74) Representative: Bryn-Jacobsen, Caelia

(57) **Abstract**

A power distribution apparatus is disclosed. In one example, the power distribution apparatus includes a first power source (102A) configured to provide electrical power to a load (101) and a second power source (102B) configured to provide electrical power to the load (101). A transfer switch (105) is configured to switch a source of power to the load (101) between the first power source (102A) and the second power source (102B). A control circuit (115) is configured to cause the transfer switch (105) to cause a transfer of power to the load (101) from the first power source (102A) to the second power source (102B) in response to a user command and to delay the transfer of power to be within a transfer time window and based on a phase relationship between power provided by the first power (102A) and second power sources (102B).

## Description

### CROSS-REFERENCE TO RELATED APPLICATIONS

This application claims the benefit of and priority to U.S. Provisional Application No. 63/763,475, filed on February 26, 2025, and U.S. Non-Provisional Application No. 19/543,267, filed on February 18, 2026.

### TECHNICAL FIELD

This disclosure is directed to electrical power distribution systems, and more particularly, to power distribution systems in which a load may receive power from a selected one of a number of power sources.

### BACKGROUND

Many large electrical loads may have a need to operate without substantial interruption. For example, a data center comprising a number of servers may be operated substantially continuously. To ensure continuous operation, many such electrical loads have backup power sources to ensure the supply of power in the event that a main (or primary) power source cannot provide power for some reason. The different power sources may be connected by a switch to the load.

One type of switch capable of rapid transfer between two different power sources is referred to as a static transfer switch (STS). An STS may be used to select which of the power sources is to provide power to the load at any given time, and may allow for relatively rapid transfers of power when one of the power sources needs to be taken offline or cannot otherwise provide power within specified limits. In designing an STS for switching between power sources, consideration may be given to various parameters such as transfer time (the time required to transition from the primary power source to the backup power source) and an inrush factor (the amount that an inrush current that occurs upon switching exceeds a nominal current).

### SUMMARY

A power distribution apparatus is disclosed. In one example, the power distribution apparatus includes a first power source configured to provide electrical power to a load and a second power source configured to provide electrical power to the load. A transfer switch is configured to switch a source of power to the load between the first power source and the second power source. A control circuit is configured to cause the transfer switch to cause a transfer of power to the load from the first power source to the second power source in response to a user command. The control circuit is configured to delay the transfer of power to within a specified transfer time window defined by a user input and further configured to cause the transfer switch to carry out the transfer of power at a time within the transfer time window and based on a phase relationship between power provided by the first power source and power from the second power source.

### BRIEF DESCRIPTION OF THE DRAWINGS

The above and/or other examples will become apparent and more readily appreciated from the following description of examples, taken in conjunction with the accompanying drawings, in which:
FIG. 1 is a block diagram of one example of a power distribution system coupled to a load.
FIG. 2 is a block diagram of one example of a control unit used in a power distribution system.
FIG. 3 is a graphic illustration of the functioning of a power distribution system with regard to a delayed optimal power transfer.
FIG. 4 is a flow diagram illustrating a method for delayed optimal phase transfer.
FIG. 5 is an example of a display on a user interface of a control circuit configured to perform a phase transfer in accordance with the disclosure.

### DETAILED DESCRIPTION

Reference will now be made in detail to examples which are illustrated in the accompanying drawings, wherein like reference numerals refer to like elements throughout. In this regard, the examples may have different forms and may not be construed as being limited to the descriptions set forth herein.

It will be understood that the terms "include," "including," "comprise," and/or "comprising," when used in this specification, specify the presence of stated features, integers, steps, operations, elements, and/or components, but do not preclude the presence or addition of one or more other features, integers, steps, operations, elements, components, and/or groups thereof.

It will be further understood that, although the terms "first," "second," "third," etc., may be used herein to describe various elements, components, regions, layers and/or sections, these elements, components, regions, layers and/or sections may not be limited by these terms. These terms are only used to distinguish one element, component, region, layer or section from another element, component, region, layer or section.

As used herein, the term "and/or" includes any and all combinations of one or more of the associated listed items. Expressions such as "at least one of," when preceding a list of elements, modify the entire list of elements and do not modify the individual elements of the list.

Various terms are used to refer to particular system components. Different companies may refer to a component by different names - this document does not intend to distinguish between components that differ in name but not function.

Matters of these examples that are obvious to those of ordinary skill in the technical field to which these examples pertain may not be described herein in detail.

Transfer time is a key specification for static transfer switches. In non-emergency transfer conditions, the moment at which a transfer occurs is less critical than the amount of time to carry out the transfer. It is desirable to deliver critical power to loads with the least amount of disturbance possible. However, in performing a transfer of power between two sources, it may not always be possible to perform a transfer without significant disturbance to the load. For example, phase differences between power sources can cause a significant voltage drop. This voltage drop can cause disturbances to the load, including malfunctions.

The present disclosure provides an apparatus and method for optimizing transfers between one power source and another. A user may input various parameters, including a minimum transfer time, and may also input a maximum transfer time. When a request to transfer from one power source to another is received (e.g., a manual request input by the user), a control circuit may delay the transfer for at least the minimum amount of time. A measurement circuit may also be provided (and may be incorporated into the control circuit) to measure a phase difference between power provided by the power sources. After the delay, the control circuit may cause a switch to carry out the transfer when, e.g., an optimal phase relationship is present between power provided by the two sources. Various examples of such a system and method are now discussed in further detail.

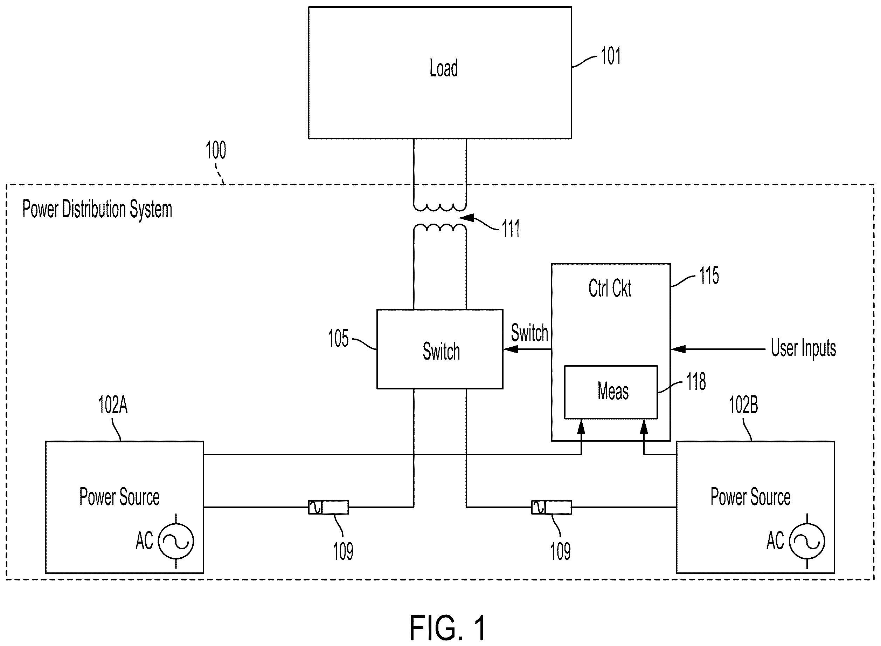

FIG. 1 is a block diagram of one example of a power distribution system coupled to a load. Power distribution system 100 as shown here is coupled to provide power to load 101. Power distribution system 100 includes a first power source 102A and a second power source 102B. In some examples, one of these power sources may be designated as a primary power source, while the other is designated as a secondary, or backup power source.

Power sources 102A and 102B are shown here as AC power sources, although this is intended to be a non-limiting example. Power sources 102A and 102B are each coupled to a switch 105 via corresponding relays 109. At a given time, one of power sources 102A and 102B may be providing power to load 101, while the other one generates power in a standby mode. Power sources 102A and 102B may be substantially identical in some examples, with each being capable of providing power to load 101 within specified ranges of voltage and current.

Switch 105 in the illustrated example is a static transfer switch (STS) that may provide a transfer of power source relatively quickly so as to minimize the interruption of electrical power provided to load 101. Transformer 111 as shown here is coupled between switch 105 and load 101. The transformer may, in an example, be a step-down transformer to reduce the voltage received from the currently selected one of power sources 102A and 102B.

Power distribution system 100 also includes a control circuit 103. The functions carried out by control circuit 103 include controlling the switch to select the operational power source (i.e. that which is currently providing power to load 101), as well as monitoring operation of both of the power sources. To monitor operation of the power sources, control circuit 115 includes a measurement circuit 115 configured to measure various parameters of power sources 102A and 102B. These parameters may include voltage, current, and phase. Measurement circuit 115 may also track a phase difference between the power generated by power source 102A and that of power source 102B. Furthermore, measurement circuit 115 may also derive a rate of change of the phase difference between the power generated by power sources 102A and 102B. The phase difference and its corresponding rate of change may be utilized to determine when to carry out a transfer of primary power source from one of power sources 102A and 102B to the other, as will be discussed in further detail below.

Control circuit 115 is configured to receive various user inputs. Among these user inputs are parameters for carrying out a delayed, optimized transfer of power between power sources 102A and 102B, e.g., in response to a manual user request. For example, a user may input a minimum delay time to carry out the transfer, a maximum delay time, and a phase difference threshold. In response to receiving a command to transfer power to the load from one of power sources 102A and 102B to the other, control circuit 115 may, e.g., assert the Switch signal to cause switch 105 to carry out the transfer within a specified transfer time window and when a the phase difference between power from the two sources is less than a particular threshold value. In this manner, the transfer of power may be carried out in an optimized manner while reducing any disturbances to the load 101. It is noted that, even when the phase difference is less than the threshold value, additional delay may be implemented to ensure the transfer occurs at or as close to the optimal time as possible (e.g., when the phases are substantially aligned). Control circuit 115 may thus be configured to predict the optimal transfer time (and may further, provide an indication of the optimal transfer time to the user). Control circuit 115 may also cause a source transfer to be carried out in response to determining that a waveform generated by a currently active one of the first power source and the second power source is at a particular value.

The minimum delay time specified by a user input may determine a delay time between the time a transfer command is received and the earliest time the transfer may be carried out. A maximum transfer time may also be specified, and the control circuit 115 may respond in different ways. For example, the control circuit 115 may cause assertion of the switch signal irrespective of the phase difference in power provided by the respective power sources 102A and 102B if the maximum transfer time has elapsed. In another example, control circuit 115 may abort the transfer if the maximum transfer time has elapsed, generating an indication to a user such that another attempt can be made or other intervention can be carried out. It is noted that a maximum transfer time is not required, and thus the window may be indefinite. Accordingly, in one example, once the minimum delay time has been satisfied the transfer can be carried out, e.g., when the phase difference is below a specified threshold. Responses of control circuit 115 based on a maximum transfer time may be one of the user inputs in addition to the maximum and minimum transfer times. The phase difference threshold may also be a user input.

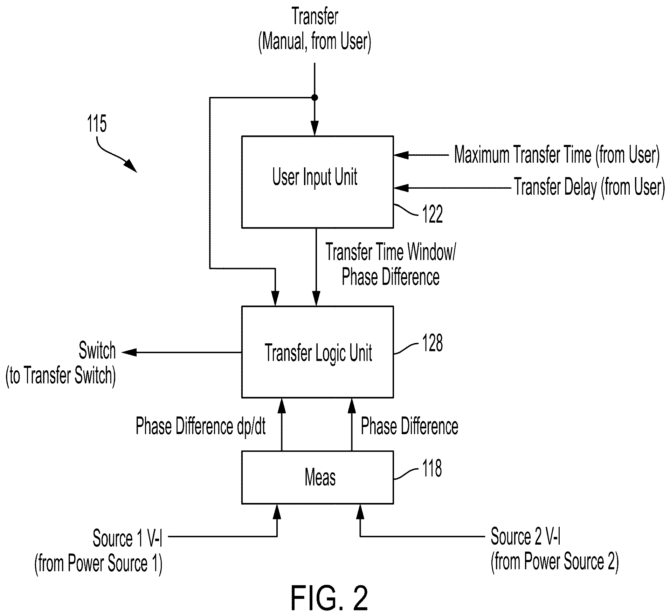

FIG. 2 is a block diagram of one example of a control circuit used in a power distribution system. Control circuit 115 in the illustrated example includes a user input unit 122, a transfer logic unit 128, and measurement circuit 115.

User input unit 122 in this example is configured to receive, from a user, inputs such as a transfer delay time (e.g., a minimum delay to elapsed before a transfer occurs in response to a transfer command) and a maximum transfer time. In some examples, user inputs such as a phase difference threshold may also be received. These inputs may be aggregated by and stored within user input unit 122, and may also be provided to transfer logic unit 128.

Transfer logic unit 128 in the example shown is configured to receive information regarding a transfer time window and a phase difference threshold. A manual (user input) transfer command may also be received by transfer logic unit 128. The disclosure further contemplates that automatic transfer commands may also be received.

Measurement circuit 118 as shown here is configured to receive voltage and/or current measurements from the respectively coupled power sources. Based on these measurements, measurement circuit 118 may determine a phase difference between the two. In some examples, measurement circuit 118 may also determine a rate of change of the phase difference (Phase Difference dp/dt) based on successive measurements and phase determinations. This information may then be forwarded to transfer logic unit 128. Measurement circuit 118 may also be configured to predict, based on the rate of change of the phase difference, when the two power sources are substantially in phase with respect to the power produced by each. This may allow control circuit 115 to delay the transfer of power further (even when the phase difference is less than the threshold) until the predicted optimal transfer time.

Using the transfer time window and phase difference threshold, along with a current phase difference, and in some implementations, the phase difference rate of change, transfer logic unit 128 may determine an optimum time to assert the Switch signal and thus cause the static transfer switch to carry out the transfer of power from one power source to another. For example, if transfer logic unit 128 determines that a current time is within the transfer time window (meaning that at least the minimum desired delay has elapsed) and that the phase difference is less than the desired threshold, transfer logic unit 128 may assert the Switch signal and thus initiate the transfer. In examples in which the rate of change of the phase difference is provided, transfer logic unit 128 may anticipate when the conditions for effecting a transfer are met, allowing greater precision (and thus optimization) in the time the transfer is actually carried out.

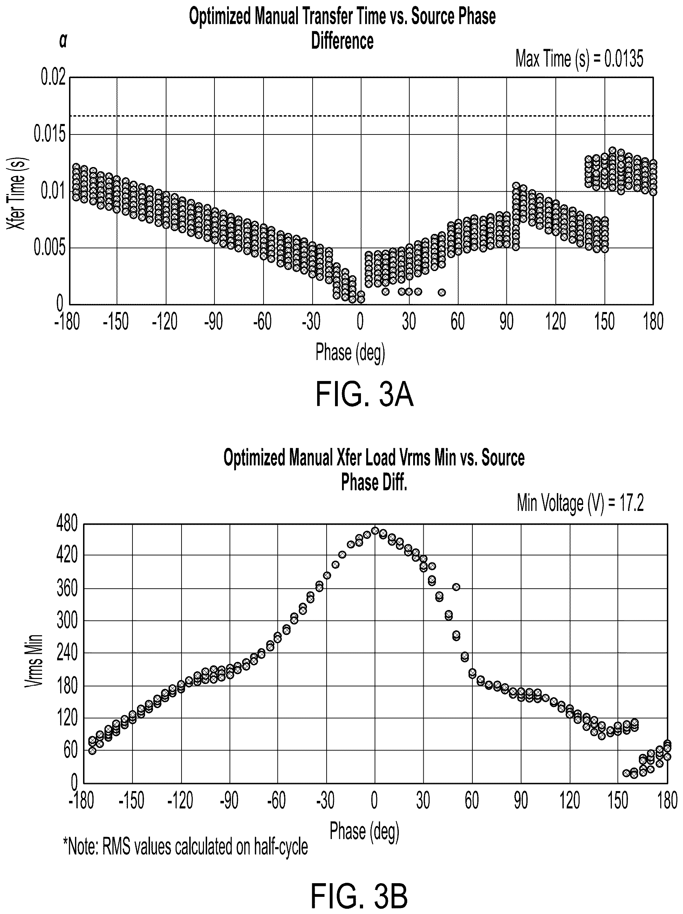

FIG. 3 is a graphic illustration of the functioning of a power distribution system with regard to a delayed optimal power transfer. In (A), a graph of phase difference (horizontal axis) vs. transfer time (vertical axis) is shown. The phase difference in this example may reflect the phase of the oncoming power source relative to the current power source. On the left hand portion of the graph, the phase of the power source coming online is lagging that of the current power source. As this lag declines, the transfer time declines correspondingly. The minimal transfer time occurs at or near a zero degree lag before beginning to rise again. Accordingly, the optimal transfer may occur when the phase difference is zero. This may allow the transfer to take place with little or no disruption of power received by the load circuit.

Graph (B) illustrates the phase difference (horizontal axis) vs. the RMS voltage provided to the load (vertical axis) during the transfer. The general trend shown is that as the phase difference between the sources becomes smaller, the greater the RMS voltage received by the load at the actual time of the transfer, with the latter value peaking at or near a zero degree phase difference. Accordingly, Graph (B) shows that the least disruption to the load occurs when the phase difference is at or near zero.

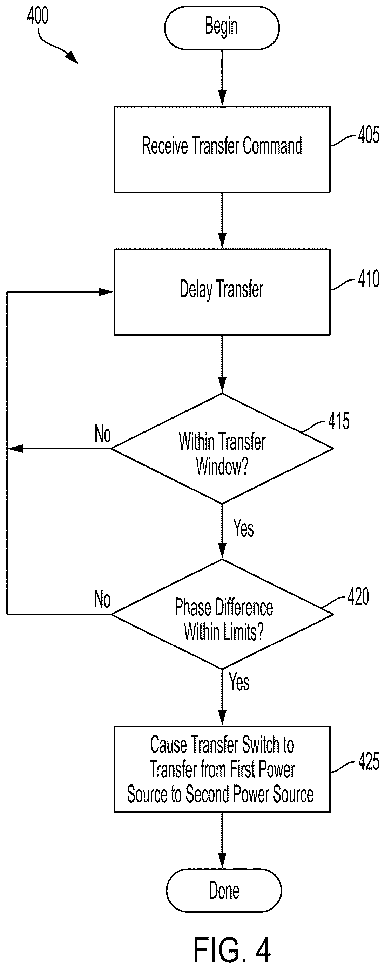

FIG. 4 is a flow diagram illustrating a method for delayed optimal power transfer. Method 400 may be carried out with various implementations of the power distribution system discussed above, and may also be carried out in some systems not explicitly discussed herein.

Method 400 includes receiving a transfer command (block 405), indicating that a transfer of a power source providing power to a load is to occur. The transfer does not occur immediately upon receiving the command, but instead is delayed (block 410) by some specified amount. The transfer continues to be delayed if time elapsed since receiving the transfer command is not in the transfer window (block 415, no). If the time elapsed is within the transfer window (block 415, yes), but the phase difference is not within specified limits (e.g., below a threshold; block 420, no), the transfer continues to be delayed. However, once the phase difference is within limits (block 420, yes), the transfer switch causes power to the load to be transferred from the first power source to the second power source (block 425). It is noted that, even when the phase difference is within the specified limits and the time elapsed is within the transfer window, the transfer may be additionally delayed until the phase difference is at a predicted optimal point.

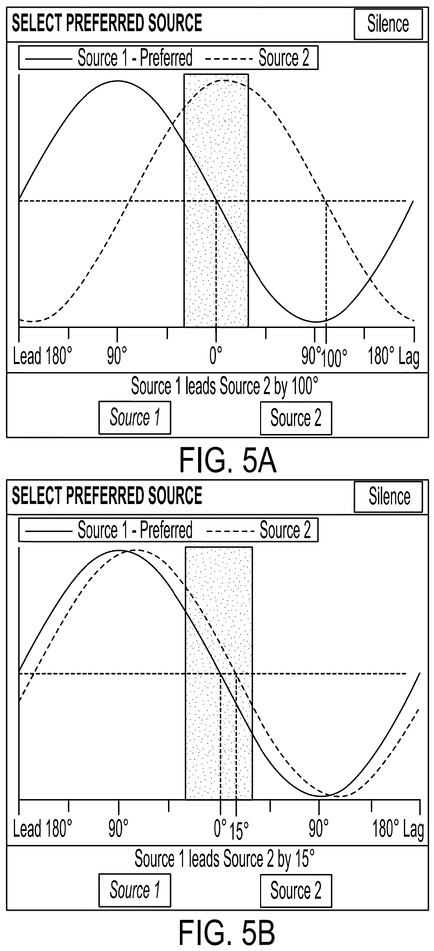

FIG. 5 is an example of a display on a user interface of a control circuit configured to perform a phase transfer in accordance with the disclosure. In (A), Source 1 leads Source 2 by 100°, which is outside of specified limits as shown. In (B), which may occur after some time has elapsed from (A), Source 1 leads Source 2 by only 15°, and is within specified limits. Accordingly, a transfer of power from one source to another may be carried out during the time.

Further examples are set out in the clauses below:
1. A power distribution apparatus comprising:
   a first power source configured to provide electrical power to a load;
   a second power source configured to provide electrical power to the load;
   a transfer switch configured to switch a source of power to the load between the first power source and the second power source; and
   a control circuit configured to cause the transfer switch to cause a transfer of power to the load from the first power source to the second power source in response to a transfer command, wherein the control circuit is configured to delay the transfer of power to within a specified transfer time window defined by a user input, and wherein the control circuit is configured to cause the transfer switch to carry out the transfer of power at a time within the transfer time window and based on a phase relationship between power provided by the first power source and power from the second power source.
2. The power distribution apparatus of clause 1, wherein the control circuit includes a measurement circuit configured to measure a phase difference between power from the first power source and power from the second power source.
3. The power distribution apparatus of clause 1 or clause 2, wherein the control circuit is configured to cause the transfer switch to cause a transfer of power to the load from the first power source to the second power source within the transfer time window in response to a or the phase difference falling below a threshold value.
4. The power distribution apparatus of clause 2 or clause 3 when dependent on clause 2, wherein the measurement circuit is further configure to determine a rate of change of the phase difference between power from the first power source and power from the second power source.
5. The power distribution apparatus of any one of clauses 1 to 4, wherein the transfer command is a user-initiated command.
6. The power distribution apparatus of any one of clauses 1 to 5, wherein the control circuit is configured to cause the transfer switch to carry out the transfer of power upon expiration of the specified transfer time window if the transfer has not otherwise occurred.
7. The power distribution apparatus of any one of clauses 1 to 6, wherein the control circuit is configured to abort the transfer in response to upon expiration of the specified transfer time window if the transfer has not otherwise occurred.
8. The power distribution apparatus of any one of clauses 1 to 7, wherein the control circuit is configured to cause the transfer switch to cause a transfer of power to the load from the first power source to the second power source in response to determining that a waveform generated by a currently active one of the first power source and the second power source is at a particular value.
9. The power distribution apparatus of any one of clauses 1 to 8, further comprising a transformer coupled to receive power from a selected one of the first and second power sources.
10. The power distribution apparatus of any one of clauses 1 to 9, further comprising a first relay coupled between the first power source and the load, and a second coupled between the second power source and the load.
11. The power distribution apparatus of any one of clauses 1 to 10, wherein the control circuit is further configured to:
   predict an optimal transfer time within the transfer time window; and
   delay causing the transfer of power until the optimal transfer time.
12. A method for performing a transfer of power, the method comprising:
   receiving, at a control circuit, a specified transfer time window defined by a user input for transferring power to a load from a first power source to a second power source, wherein the specified transfer time window includes a minimum delay and a maximum delay;
   receiving, at the control circuit, a command to transfer power to the load from the first power source to the second power source;
   measuring, using a measurement circuit, a phase difference between power provided by the first power source and power provided by the second power source; and
   transferring power to the load from the first power source to the second power source in response to the phase difference falling below a threshold value within the specified transfer time window.
13. The method of clause 12, wherein measuring the phase difference further comprises measuring, using the measurement circuit, a rate of change of the phase difference between power provided by the first power source and power provided by the second power source, and
   wherein the method further comprises:
   predicting, using the control circuit, an optimal transfer time based on a measured rate of change of the phase difference; and
   delaying the transferring of power until the predicted optimal transfer time.
14. The method of clause 12 or clause 13, further comprising carrying out the transferring of power upon expiration of the maximum delay of the specified transfer time window if the transfer has not otherwise occurred.
15. The method of any one of clauses 12 to 14, further comprising aborting the transferring of power in response to expiration of the maximum delay of the specified transfer time window if the transferring of power has not otherwise occurred.
16. The method of any one of clauses 12 to 15, wherein the transferring of power further comprises determining, at the control circuit, that a waveform generated by a currently active one of the first power source and the second power source is at a particular value.
17. The method of any one of clauses 12 to 16, wherein receiving the command to transfer power comprises receiving a user-initiated transfer command.
18. A system for performing an optimized transfer of electrical power, the system comprising:
   a first power source configured to provide electrical power to a load;
   a second power source configured to provide electrical power to the load;
   a static transfer switch configured to selectively couple the load to one of the first power source and the second power source;
   a measurement circuit configured to measure a phase difference between power provided by the first power source and power provided by the second power source, wherein the measurement circuit is further configured to determine a rate of change of the phase difference; and
   a control circuit coupled to the measurement circuit and to the static transfer switch, the control circuit configured to:
      receive a user-defined transfer time window comprising a minimum delay and a maximum delay;
      receive a command to transfer power from the first power source to the second power source;
      predict, based on a measured rate of change of the phase difference, an optimal transfer time within the transfer time window; and
      assert a switch signal to the static transfer switch to perform the transfer of power at the predicted optimal transfer time when the phase difference is below a threshold value and the minimum delay has elapsed.
19. The system of clause 18, further comprising:
   a transformer coupled to receive power from a selected one of the first power source and the second power source;
   a first relay coupled between the first power source and the load; and
   a second relay coupled between the second power source and the load.
20. The system of clause 18 or clause 19, wherein the control circuit includes a user interface configured to display an indication of a phase relationship between the first power source and the second power source and further configured to indicate whether the phase difference is within specified limits, wherein the control circuit is configured to inhibit assertion of the switch signal until the phase difference is within the specified limits and the minimum delay has elapsed.

It may be understood that the examples described herein may be considered in a descriptive sense only and not for purposes of limitation. Descriptions of features or examples within each example may be considered as available for other similar features or examples in other examples.

While examples have been described with reference to the figures, it will be understood by those of ordinary skill in the art that various changes in form and details may be made therein without departing from the scope as defined by the following claims.

## Claims

1. A power distribution apparatus comprising:
a first power source configured to provide electrical power to a load;
a second power source configured to provide electrical power to the load;
a transfer switch configured to switch a source of power to the load between the first power source and the second power source; and
a control circuit configured to cause the transfer switch to cause a transfer of power to the load from the first power source to the second power source in response to a transfer command, wherein the control circuit is configured to delay the transfer of power to within a specified transfer time window defined by a user input, and wherein the control circuit is configured to cause the transfer switch to carry out the transfer of power at a time within the transfer time window and based on a phase relationship between power provided by the first power source and power from the second power source.

2. The power distribution apparatus of claim 1, wherein the control circuit includes a measurement circuit configured to measure a phase difference between power from the first power source and power from the second power source, and
wherein the control circuit is optionally configured to cause the transfer switch to cause a transfer of power to the load from the first power source to the second power source within the transfer time window in response to the phase difference falling below a threshold value.

3. The power distribution apparatus of claim 2, wherein the measurement circuit is further configured to determine a rate of change of the phase difference between power from the first power source and power from the second power source.

4. The power distribution apparatus of any one of claims 1 to 3, wherein the transfer command is a user-initiated command.

5. The power distribution apparatus of any one of claims 1 to 4, wherein the control circuit is further configured to:
cause the transfer switch to carry out the transfer of power upon expiration of the specified transfer time window if the transfer has not otherwise occurred; and/or
cause the transfer switch to cause a transfer of power to the load from the first power source to the second power source in response to determining that a waveform generated by a currently active one of the first power source and the second power source is at a particular value.

6. The power distribution apparatus of any one of claims 1 to 5, further comprising:
a transformer coupled to receive power from a selected one of the first and second power sources; and/or
a first relay coupled between the first power source and the load, and a second relay coupled between the second power source and the load.

7. The power distribution apparatus of any one of claims 1 to 6, wherein the control circuit is further configured to:
abort the transfer in response to expiration of the specified transfer time window if the transfer has not otherwise occurred; and/or
predict an optimal transfer time within the transfer time window, and delay causing the transfer of power until the optimal transfer time.

8. A method for performing a transfer of power, the method comprising:
receiving, at a control circuit, a specified transfer time window defined by a user input for transferring power to a load from a first power source to a second power source, wherein the specified transfer time window includes a minimum delay and a maximum delay;
receiving, at the control circuit, a command to transfer power to the load from the first power source to the second power source;
measuring, using a measurement circuit, a phase difference between power provided by the first power source and power provided by the second power source; and
transferring power to the load from the first power source to the second power source in response to the phase difference falling below a threshold value within the specified transfer time window.

9. The method of claim 8, wherein measuring the phase difference further comprises measuring, using the measurement circuit, a rate of change of the phase difference between power provided by the first power source and power provided by the second power source, and
wherein the method further comprises:
predicting, using the control circuit, an optimal transfer time based on a measured rate of change of the phase difference; and
delaying the transferring of power until the predicted optimal transfer time.

10. The method of claim 8 or claim 9, further comprising:
carrying out the transferring of power upon expiration of the maximum delay of the specified transfer time window if the transfer has not otherwise occurred; and/or
aborting the transferring of power in response to expiration of the maximum delay of the specified transfer time window if the transferring of power has not otherwise occurred.

11. The method of any one of claims 8 to 10, wherein the transferring of power further comprises determining, at the control circuit, that a waveform generated by a currently active one of the first power source and the second power source is at a particular value.

12. The method of any one of claims 8 to 11, wherein receiving the command to transfer power comprises receiving a user-initiated transfer command.

13. A system for performing an optimized transfer of electrical power, the system comprising:
a first power source configured to provide electrical power to a load;
a second power source configured to provide electrical power to the load;
a static transfer switch configured to selectively couple the load to one of the first power source and the second power source;
a measurement circuit configured to measure a phase difference between power provided by the first power source and power provided by the second power source, wherein the measurement circuit is further configured to determine a rate of change of the phase difference; and
a control circuit coupled to the measurement circuit and to the static transfer switch, the control circuit configured to:
receive a user-defined transfer time window comprising a minimum delay and a maximum delay;
receive a command to transfer power from the first power source to the second power source;
predict, based on a measured rate of change of the phase difference, an optimal transfer time within the transfer time window; and
assert a switch signal to the static transfer switch to perform the transfer of power at the predicted optimal transfer time when the phase difference is below a threshold value and the minimum delay has elapsed.

14. The system of claim 13, further comprising:
a transformer coupled to receive power from a selected one of the first power source and the second power source;
a first relay coupled between the first power source and the load; and
a second relay coupled between the second power source and the load.

15. The system of claim 13 or claim 14, wherein the control circuit includes a user interface configured to display an indication of a phase relationship between the first power source and the second power source and further configured to indicate whether the phase difference is within specified limits, wherein the control circuit is configured to inhibit assertion of the switch signal until the phase difference is within the specified limits and the minimum delay has elapsed.
